# EUROPEAN PATENT APPLICATION

(11) **EP 2 891 971 A1**
(43) Date of publication of application: **08.07.2015**
(21) Application number: 15150282.0
(22) Date of filing: 07.01.2015
(51) Int. Cl.: G06F 3/0488, G06F 3/0485

(54) **Electronic device and method for operating the electronic device**

(30) Priority: 07.01.2014 US 201461924581 P; 21.02.2014 KR 20140020882
(71) Applicant: Samsung Electronics Co., Ltd, Gyeonggi-do 443-742 (KR)
(72) Inventor: Lee, Jae-Wook, 443-742 Gyeonggi-do (KR); Cho, An-Ki, 443-742 Gyeonggi-do (KR); Kim, Sun-Geun, 443-742 Gyeonggi-do (KR)
(74) Representative: HGF Limited

(57) **Abstract**

A method for operating an electronic device is provided. The method includes displaying at least a first application and a second application on a screen of the electronic device, detecting a user input for the second application, generating a first virtual input for the first application based on the user input for the second application, generating a second virtual input, which is different from the first virtual input, based on additional information related to the user input for the second application, and performing a function corresponding to at least one of the first virtual input and the second virtual input using the first application.

## Description

### TECHNICAL FIELD

The present disclosure relates to an electronic device and method for operating the electronic device.

### BACKGROUND

For recent various electronic devices, a wireless communication functionality and also other various functionalities, such as radio communication, a camera, music play, video play, multimedia play, gaming, etc. have been developed and are provided by various electronic devices. A display is provided on a front side of the electronic device for a user to easily use such various functionalities. For example, for modem smartphones, touch-sensitive displays, e.g., touch screens, are arranged on the front side of the electronic devices.

Various applications, which may also be referred to as "Apps", are installed and executed in the electronic device. In a single electronic device, multiple applications may be running concurrently and some of the applications may be running as background applications.

To run and control the applications in the electronic device, various input devices and/or units, e.g., a touch screen, buttons, a mouse, a keyboard, sensors, etc., may be used.

Although there exists a function of running multiple applications concurrently, a technology to simultaneously control the multiple applications doesn't exist yet due to limitations on framework function. For example, while multiple applications running concurrently are displayed on the screen, the multiple applications may only be controlled sequentially and may not be controlled simultaneously.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device and method for operating the electronic device, by which events for multiple applications running concurrently in a single electronic device may be detected and the multiple applications may be simultaneously controlled according to the detected events.

In accordance with an aspect of the present disclosure, a method for operating an electronic device is provided. The method includes displaying at least a first application and a second application on a screen of the electronic device, detecting a user input for the second application, generating a first virtual input for the first application based on the user input for the second application, generating a second virtual input, which is different from the first virtual input, based on additional information related to the user input for the second application, and performing a function corresponding to at least one of the first virtual input and the second virtual input using the first application.

In accordance with another aspect of the present disclosure, an electronic device that runs multiple applications is provided. The electronic device includes a display configured to display at least a first application and a second application on a screen of the electronic device, and a processor configured to detect a user input for the second application, to generate a first virtual input for the first application based on the user input for the second application, to generate a second virtual input, which is different from the first virtual input, based on additional information related to the user input for the second application, and to perform a function corresponding to at least one of the first virtual input and the second virtual input using the first application.

Other aspects, advantages, and salient features of the disclosure will become apparent to those skilled in the art from the following detailed description, which, taken in conjunction with the annexed drawings, discloses various embodiments of the present disclosure

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a schematic diagram of a network environment, according to an embodiment of the present disclosure;
FIG. 2 is a block diagram of an electronic device, according to an embodiment of the present disclosure;
FIG. 3 illustrates a screen for multi focus processing for multi windows, according to an embodiment of the present disclosure;
FIG. 4 illustrates a screen in which multiple applications are controlled simultaneously by using an auxiliary input application, according to an embodiment of the present disclosure;
FIG. 5 is a flowchart illustrating a procedure for operating an electronic device, according to an embodiment of the present disclosure;
FIG. 6 illustrates a concept of setting up multi-focus for multiple windows, according to an embodiment of the present disclosure;
FIGS. 7 and 8 illustrate screens for operating background applications by using an auxiliary input application, according to an embodiment of the present disclosure;
FIG. 9 illustrates an occasion where multiple applications are simultaneously controlled using multi-focusing, according to an embodiment of the present disclosure;
FIGS. 10A, 10B, and 10C illustrates execution of an auxiliary input application in an electronic device, according to an embodiment of the present disclosure;
FIG. 11 is a flowchart illustrating a procedure for handling a touch event in an electronic device, according to an embodiment of the present disclosure;
FIG. 12 illustrates a concept of setting up focuses for overlapping multiple applications, according to an embodiment of the present disclosure;
FIG. 13 illustrates a screen in which a cursor is placed in a screen area of an auxiliary input application, according to an embodiment of the present disclosure;
FIG. 14 illustrates a concept of handling a touch event, according to an embodiment of the present disclosure;
FIG. 15 is a flowchart illustrating a procedure of handling a touch event in an overlapping application, according to an embodiment of the present disclosure; and
FIG. 16 is a detailed block diagram of an electronic device, according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms "comprise" and/or "comprising" as herein used specify the presence of disclosed functions, operations, or components, but do not preclude the presence or addition of one or more other functions, operations, or components. It will be further understood that the terms "comprise" and/or "have," when used in this specification, specify the presence of stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items. For examples, "A or B" may include A, or include B, or include both A and B.

Ordinal numbers as herein used, such as "first", "second", etc., may modify various components of various embodiments, but do not limit those components. For example, these terms do not limit order and/or importance of corresponding elements, components, regions, layers and/or sections. These terms are only used to distinguish one element, component, region, layer or section from another region, layer or section. For example, a first user device and a second user device refer to two different user devices. Thus, a first element, component, region, layer or section discussed below could be termed a second element, component, region, layer or section without departing from the teachings of the embodiments of the present disclosure. When the term "connected" or "coupled" is used, a component may be directly connected or coupled to another component or may be indirectly connected or coupled to another component via another new component.

However, if a component is said to be "directly connected" or "directly coupled" to another component, it should be interpreted as literally as it says. The terminology used herein is for the purpose of describing particular embodiments only and is not intended to be limiting of the embodiments of the present disclosure. It is to be understood that the singular forms "a," "an," and "the" include plural references unless the context clearly dictates otherwise.

Unless otherwise defined, all terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

An electronic device according to various embodiments of the present disclosure may have a communication functionality. For example, the electronic device may include at least one of smart phones, tablet Personal Computers (PCs), mobile phones, video phones, electronic-book (e-book) readers, desktop PCs, laptop PCs, netbook computers, Personal Digital Assistants (PDAs), Portable Multimedia Players (PMPs), Motion Picture Expert Group (MPEG) Audio Layer 3 (MP3) players, mobile medical devices, cameras, wearable devices, e.g., Head-Mounted Devices (HMDs), such as electronic glasses, electronic clothes, electronic bracelets, electronic necklaces, electronic accessories, electronic tattoos, and smart watches, and any other similar and/or suitable type of electronic device.

In some embodiments, the electronic device may be a smart home appliance having a display functionality. The smart home appliance may include at least one of e.g., televisions, Digital Video Disc (DVD) players, audio systems, refrigerators, air conditioners, cleaning machines, ovens, microwaves, washing machines, air purifiers, set-top boxes, Television (TV) sets, e.g., Samsung HomeSync™, Apple TV™, or Google TV™, game consoles, electronic dictionaries, electronic keys, camcorders, and electronic albums.

In some embodiments, the electronic device may include at least one of a variety of medical equipment, e.g., Magnetic Resonance Angiography (MRA), Magnetic Resonance Imaging (MRI), Computed Tomography (CT), photographing device, ultrasonic device, etc., navigation devices, Global Positioning System (GPS) receivers, Event Data Recorders (EDRs), Flight Data Recorders (FDRs), car infotainment devices, marine electronic devices, e.g., marine navigation systems, gyro-compass, etc., avionics, security devices, car head units, industrial or home robots, banking agency's Automatic Teller Machines (ATMs), and Point of Sales (POSs) for shops.

In some embodiments, the electronic device may include at least one of furniture or a building/part of a structure including a display functionality, electronic boards, electronic signature receiving devices, projectors, or various instrumental equipment, e.g., meters for water, electricity, gas, or radio waves. The electronic device in accordance with various embodiments of the present disclosure may be one or more combinations of the aforementioned devices. In addition, the electronic device in accordance with various embodiments of the present disclosure may be a flexible device. It will be obvious to a person of ordinary skill in the art that the electronic device is not limited to the aforementioned examples.

An electronic device in accordance with various embodiments of the present disclosure will now be described with reference to accompanying drawings. The term "user" as herein used may refer to a person who uses the electronic device or a device (e.g., an artificially intelligent device) that uses the electronic device.

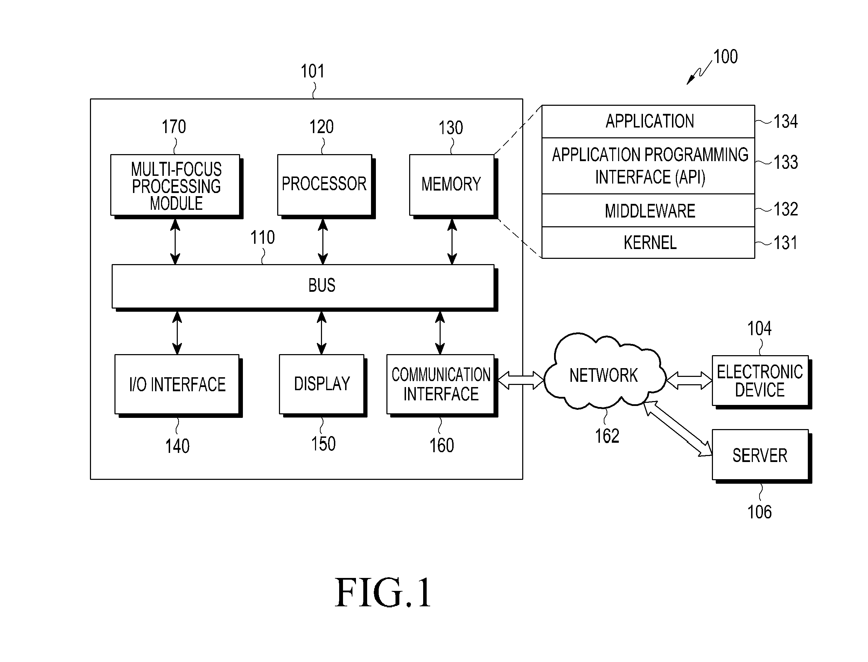

FIG. 1 illustrates a network environment including an electronic device 101, according to an embodiment of the present disclosure.

Referring to FIG. 1, an electronic device 101 may be included in a network environment 100, the electronic device 101 may include a bus 110, a processor 120, a memory 130, an Input/Output (I/O) interface 140, a display 150, a communication interface 160, and a multi-focus processing module 170.

The bus 110 may be a circuitry for interconnecting the enumerated components and delivering communications, e.g., control messages, among them.

The processor 120 may, for example, receive requests and/or commands from the enumerated components, the memory 130, the I/O interface 140, the display 150, the communication interface 160, and/or the multi-focus processing module 170 via the bus 110, may interpret the requests and/or commands, and may perform an operation and/or data processing according to the interpreted request and/or command.

The memory 130 may store requests, commands, and/or data received and/or generated from the enumerated components, e.g., the processor 120, the I/O interface 140, the display 150, the communication interface 160, and/or the multi-focus processing module 170. The memory 130 may include, for example, programming modules, such as a kernel 131, middleware 132, an Application Programming Interface (API) 133, an application 134, or the like. Each of the programming modules may be implemented in software, firmware, hardware, and/or two or more combinations thereof.

The kernel 131 may control or manage system resources, e.g., the bus 110, the processor 120, the memory 130 or the like, to be used to carry out an operation and/or function implemented by the other programming modules, e.g., the middleware 132, the API 133, or the application 134. Furthermore, the kernel 131 may provide an interface for the middleware 132, the API 133, and/or the application 134 to access respective components of the electronic device 101 to control and/or manage them.

The middleware 132 may act as intermediary for the API 133 and/or the application 134 to communicate data with the kernel 131. In addition, the middleware 132 may perform control operations, e.g., scheduling or load balancing, in response to a task request received from the application 134 by way of e.g., placing a high priority on at least one application included in the application 134 to use system resources, e.g., the bus 110, the processor 120, the memory or the like, of the electronic device 101.

The API 133 is an interface for the application 134 to control a function provided from the kernel 131 and/or the middleware 132, and may include at least one interface and/or function, e.g., an instruction, for e.g., file control, window control, image processing, text control, etc.

In accordance with various embodiments, the application 134 may include a Short Message Service (SMS)/Multimedia Message Service (MMS) application, an email application, a calendar application, an alarm application, a healthcare application, e.g., an application for measuring quantity of motion and/or blood sugar, and/or an environmental information application, e.g., an application for providing atmospheric pressure, humidity, and/or temperature. Additionally, the application 134 may be an application involved in information exchange between the electronic device 101 and an external electronic device 104. The application involved in such information exchange may include e.g., a notification relay application for relaying particular information to the external electronic device 104 and/or a device management application for managing the external electronic device 104.

For example, the notification relay application may include a functionality for notifying the external electronic device 104 of notification information generated in any other application, e.g., the SMS/MMS application, the email application, the healthcare application, and/or the environmental information application, of the electronic device 101. Additionally, the notification relay application may, for example, receive the notification information from the external electronic device 104 and provide the notification information to the user. The device manager application may manage, e.g., install, delete and/or update, a function, e.g., turning on/off the external electronic device 104 itself or a part of the external electronic device 104, and/or controlling display brightness of the external electronic device 104, with respect to part of the external electronic device 104 in communication with the electronic device 101, and/or a service, e.g., calling and/or messaging service, provided by the external electronic device 104 and/or an application running in the external electronic device 104.

In accordance with an embodiment of the present disclosure, the application 134 may include an application designated according to an attribute of the electronic device 104, e.g., on a type of the electronic device 104. For example, in case where the external electronic device 104 is an MP3 player, the application 134 may include an application related to music replay. Similarly, in case where the external electronic device 104 is a mobile medical device, the application 134 may include an application related to healthcare. In accordance with an embodiment, the application 134 may include at least one of an application dedicated to the electronic device 101 and an application received from the external electronic device 104 and/or a server 106.

The I/O interface 140 may deliver instructions and/or data entered by the user through an I/O device, e.g., a sensor, a keyboard, and/or a touch screen, to the processor 120, the memory 130, the communication interface 160, and/or the multi-focus processing module 170 via the bus 110. For example, the I/O interface 140 may provide data for a user touch input through the touch screen to the processor 120. The I/O interface 140 may also output a command and/or data received from the processor 120, the memory 130, the communication interface 160, and/or the multi-focus module 170 via the bus 110 through the I/O device, e.g., a speaker and/or the display 150. For example, the I/O interface 140 may output sound data processed by the processor 120 to the user.

The display 150 may display various information, e.g., multimedia data and/or text data, for the user.

The communication interface 160 may connect communication between the electronic device 101 and the external electronic device 104 and/or the server 106.

For example, the communication interface 160 may be connected to a network 162 through wired and/or wireless communication and may communicate with the external electronic device 104 and/or the server 106. The wireless communication may include at least one of Wi-Fi, Bluetooth (BT), Near Field Communication (NFC), Global Positioning System (GPS), and/or cellular communication, e.g., Long Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro) and/or Global System for Mobile (GSM). The wired communication may include at least one of a Universal Serial Bus (USB), a High Definition Multimedia Interface (HDMI), a Recommended Standard (RS) 232 and/or a Plain Old Telephone Service (POTS).

In accordance with an embodiment, the network 162 may be a telecommunications network. The telecommunications network may include at least one of a computer network, the Internet, an Internet of things, and/or a telephone network. In accordance with an embodiment, a protocol, e.g., a transport layer protocol, a data link layer protocol and/or a physical layer protocol, for communication between the electronic device 101 and the external device 104 and/or the server 106 may be supported by at least one of the application 134, the API 133, the middleware 132, the kernel 131 and/or the communication interface 160.

While, according to the embodiment of FIG.1, the electronic device 101 equipped with the communication interface 160 communicates with the external electronic device 104 and/or the server 106 over the network 120, the present disclosure is not limited thereto, and the electronic device 101 may be implemented to have no communication capability in other embodiments.

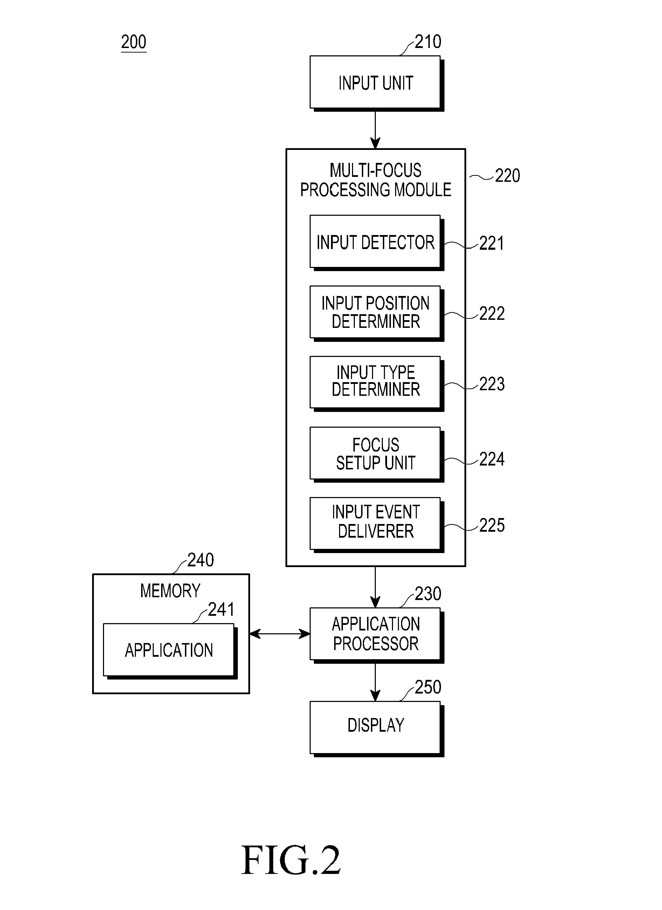

The multi-focus processing module 170 may handle at least a part of information obtained from other components, e.g., the processor 120, the memory 130, the I/O interface 140, and/or the communication interface 160, and may provide the results to the user in various ways. For example, the multi-focus processing module 170 may set up multiple focuses for multiple applications running in the electronic device 101 according to input events detected through the I/O interface 140, and may control the multiple applications simultaneously by handling the input events using the processor 120 using the multi-focusing. Further information regarding the multi-focus processing module 170 will be discussed in connection with FIG. 2.

FIG. 2 is a block diagram of an electronic device, according to an embodiment of the present disclosure.

Referring to FIG. 2, an electronic device 200 may include an input unit 210, a multi-focus processing module 220, an application processor 230, a memory 240, a display 250, and the like. The multi-focus processing module 220, which may be similar to the multi-focus processing module 170 of FIG. 1, may include at least one of an input detector 221, an input position determiner 222, an input type determiner 223, a focus setup unit 224, and an input event deliverer 225. In an embodiment of the present disclosure, the multi-focus processing module 220 may set up respective focuses for multiple applications running in the electronic device, and may enable input events detected by the input detector 221 to be handled simultaneously by the focused multiple applications.

The input detector 221 may detect an event input from any input unit, including the input unit 210. The input position determiner 222 may determine a position and/or a point where the event, e.g., the input event, detected by the input detector 221 has occurred. The position where the event has occurred may be information regarding at least an area on the display screen, e.g., pixel information, of the electronic device, and/or information for selection of multiple applications displayed separately and/or with some overlapping parts on the display, e.g., a running area of a first application, and/or a running area of a second application, and will be described in more detail later in various embodiments.

The input type determiner 223 may determine a type and/or an input type of an event that has occurred according to an embodiment of the present disclosure. For example, the input type may be any kind and/or type of an input unit and/or input device, e.g., a touch screen, a keyboard, a mouse, etc., and if the input unit and/or input device is a touch screen, then the input type may be a short touch, long touch, drag, tap, double touch, flick, drag and drop, swipe, multi-swipe, pinch, touch and hold, shake, rotate, etc..

The focus setup unit 224 may set up focus for at least one of multiple applications based on the position and input type respectively determined by the input position determiner 222 and the input type determiner 223.

The input event deliverer 225 may deliver respective input events to the focused applications.

The application processor 230 may enable respective input events to be handled in the focused applications. For example, according to an embodiment of the present disclosure, multiple focuses are set up for multiple applications, and if multiple input events are delivered to the multiple applications, respectively, then the multiple applications may handle their respective input events, simultaneously. The application processor 230 may run applications 241 stored in the memory 240, and enable one of the running applications 241 to handle an input event based on focus setup information and input event information provided from the multi-focus processing module 220.

The display 250 may show a result handled by the application processor 230. For example, according to an embodiment of the present disclosure, the display 250 may show multiple results simultaneously handled by multiple applications displayed on the screen.

While the embodiment of FIG. 2 illustrates the multi-focus processing module 220 as a separate module from the application processor 230, at least a part of the multi-focus processing module 220 may be implemented to be included in the application processor 230 and/or the input unit 210, and/or the entire function of the multi-focus processing module 220 may be implemented to be included in the application processor 230 and/or another processor.

In accordance with an embodiment of the present disclosure, an electronic device that runs multiple applications may include a display for displaying the multiple applications including at least a first application and a second application on a screen of the electronic device and a processor configured to detect a user input for the second application, and may generate a first virtual input for the first application, may generate a second virtual input different from the first virtual input based on additional information related to the user input, and may perform a function corresponding to at least one of the first and second virtual inputs by means of the first application.

The processor may set up a new focus for the first application in generating the first virtual input for the first application.

The second application may be an auxiliary input application.

The processor may process the user input for the second application by converting the user input for the second application for a user input for the first application, when a cursor displayed on the screen by execution of the auxiliary input application is placed in a screen area of the auxiliary input application.

The user input may include a touch input.

The first virtual input may include focusing and/or moving of a touch point, and the second virtual input may include a scroll event.

The additional information may include information regarding a second touch input that occurs during or after the first touch input.

The first application and the second application may be displayed such that at least parts of the first application and the second application may overlap each other on the screen.

If a user input occurs in the overlapping area of the first and second applications, the processor may handle the user input as a user input for one of the first and second applications which is located on top of another of the first and second applications.

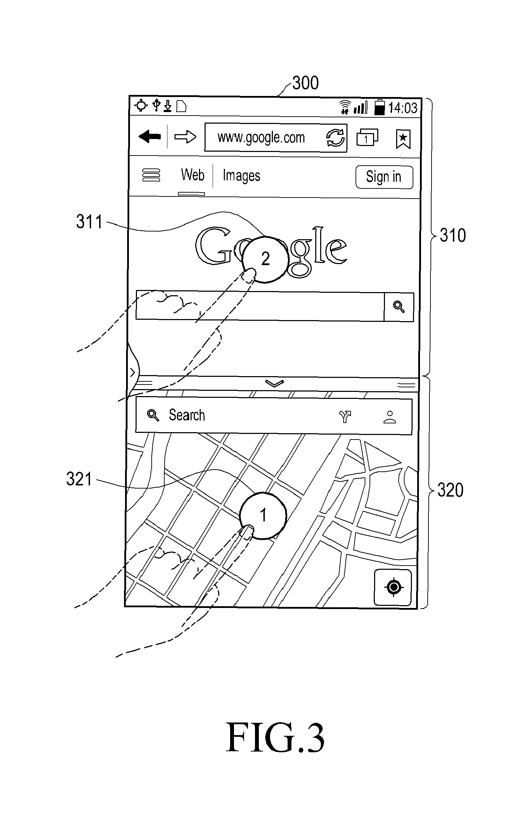

FIG. 3 illustrates a screen for multi focus processing for multi windows, according to an embodiment of the present disclosure.

Referring to FIG. 3, multiple applications currently running may be displayed on an entire screen 300 of an electronic device. For example, as shown in FIG. 3, a web page screen of an Internet portal site may be displayed in a first application screen area 310 and a map application may be displayed in a second application screen area 320. The applications, each occupying a certain area on the screen as shown in FIG. 3, may be displayed separately and/or may be displayed such that parts of respective screens of the applications overlap each other. In the latter case, the overlapping part may be transparently, translucently, or opaquely displayed.

If multiple touch events occur at a time in respective display screens of multiple applications and/or if a touch event for an application occurs before a previous touch event for another application has not been finished, as shown in FIG. 3, in the related art, handling of the touch event has to wait until handling of the previous touch event is completed, and/or the touch event is considered as a multi-touch for the application for which the previous touch event has occurred, because it may not be possible for multiple focuses to be set up for the multiple applications. On the other hand, according to an embodiment of the present disclosure, respective focuses may be set up for multiple applications displayed on the screen and thus, even if multiple input events for multiple applications occur concurrently, the multiple applications may be handled concurrently as respective input events for the multiple applications.

For example, as shown in FIG. 3, if a first touch event 321 occurs in the second application screen area 320 and a second touch event 311 occurs in the first application screen area 310 before the first touch event 321 is completed, e.g., before the touch by a finger comes off the screen, the multiple touch events for the multiple applications may be handled simultaneously in accordance an embodiment of the present disclosure.

In contrast, in the related art, even if the user wants to have separate control over each application, when multiple input events for multiple applications occur concurrently, the input events are sequentially handled and/or a subsequent touch event for an application that occurs before a previous touch event for another application is completed is considered as a multi touch for the other application. Accordingly, in the related art, separate and concurrent control over multiple applications is not possible. That is, in the related art, although multiple applications are displayed at a time on the screen according to a multi window function, concurrent control over the multiple applications is not possible. For example, in the related art, even if respective touches are made for two applications at approximately a same time, a focus is set up for an application for which the touch has been made earlier and subsequent touch events are delivered to the focused application. Accordingly, although touches are made in respective application display areas, the touches are not handled for the respective applications, but rather, are handled as a multi touch event for the first touched application.

In the meantime, while a touch event was described as an input event, the present disclosure is not limited thereto, and the input event is not limited to the touch event.

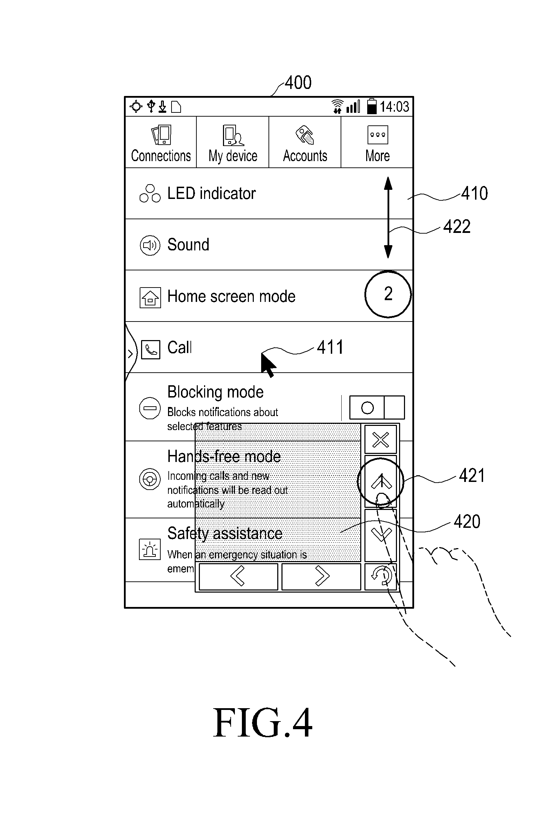

FIG. 4 illustrates a screen in which multiple applications are controlled simultaneously by using an auxiliary input application, according to an embodiment of the present disclosure.

Referring to FIG. 4, according to an embodiment of the present disclosure, if an input event occurs for an auxiliary input application, a control event corresponding to the input event may be handled concurrently by another application. For example, for a user who has difficulty making a right touch on the screen of an electronic device, e.g., a disabled person, an auxiliary input application, e.g., in a form of a mouse pad, may be provided for the user to make an input easily, as shown in FIG. 4.

According to an embodiment of the present disclosure, multiple applications currently running may be displayed on the entirety of screen 400 of an electronic device. For example, as shown in FIG. 4, a list of executable applications of the electronic device may be displayed in a first application screen area 410 and the auxiliary input application for controlling the screen of the electronic device may be displayed in a second application screen area 420. The applications may be displayed such that at least parts of their screen areas overlap each other, as shown in FIG. 4. For example, an overlapping part of the first and second application screen areas 410 and 420 may be displayed translucently.

In the related art, if a touch event occurs in the second application screen area 420, the first application is controlled by making a control event corresponding to the touch event after the touch event is completed. In an embodiment of the present disclosure, even before a previous touch event in the second application screen area 420 is completed, an event occurring for the first application may be delivered to the first application and may be handled by the first application concurrently.

For example, if a first touch event 421 occurs on a screen control function in the auxiliary input application, which is the second application screen area 410, the auxiliary input application generates a control event for the first application and delivers the control event to the first application, as soon as the first touch event 421 has occurred and/or before the first touch event 421 is completed. The first application may handle the control event while the second application, such as an auxiliary input application, handles the input event. Accordingly, an input event made by a user in the auxiliary input application may lead to immediate control over the entire screen, e.g., the first application screen.

The auxiliary input application of FIG. 4 may provide convenient user interface environment for a user, e.g., a disabled user, who has difficulty making an input for the electronic device to control the screen easily. In the embodiment of FIG. 4, concurrent control through the auxiliary input application may increase user convenience.

For example, in the related art, due to technical limitations, if a focus is set up for one of first and second applications running in the electronic device, no input event may be delivered to the non-focused application. According to an embodiment of the present disclosure, multi focusing is possible, and thus the first and second applications may be controlled concurrently. For example, if a user keeps pressing a scroll button in the auxiliary input application, a top application running right below the auxiliary input application may keep performing scrolling concurrently. Accordingly, the user may perform a control operation for the first application the user intends to control in sync with touching the second application.

As discussed with reference to FIGS. 3 and 4, according to an embodiment of the present disclosure, various functions may be provided by setting up multi focusing in order to concurrently control multiple applications running in an electronic device. A method for setting up multi focusing for multiple applications will be described in more detail in various embodiments of the present disclosure.

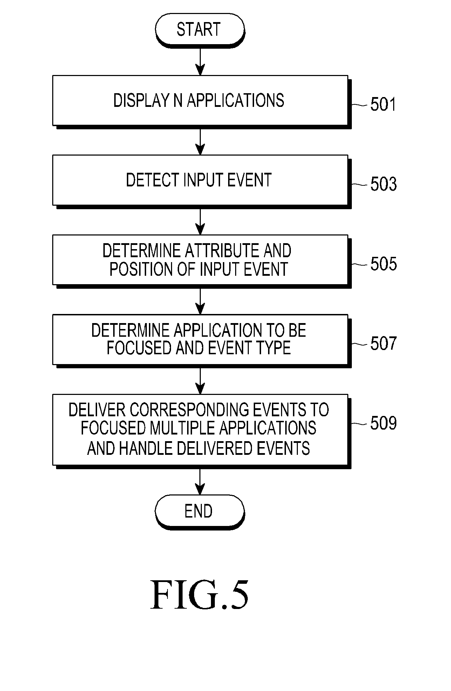

FIG. 5 is a flowchart illustrating a procedure of operating an electronic device, according to an embodiment of the present disclosure.

Referring to FIG. 5, in operation 501, N applications, which are currently running, may be displayed on the screen of an electronic device, wherein N is an integer value. The N applications may be displayed separately or with at least parts of them overlapping. A user may make and/or generate events, e.g., N events for the N applications, respectively.

The events may be touch gestures, motion gestures, button presses, key presses, voice inputs, motion inputs, mouse inputs, keyboard inputs, and/or any inputs.

The events may be detected by an input system and then delivered to an input controller. The input controller may determine information including at least one of a number, areas, and types of the events and may deliver the information to an application system. The application system may define an event to be delivered to an application controller based on the event information delivered from an input layer. The application system may analyze the delivered event information and deliver the event to a corresponding application by determining an application to which the event is to be delivered according to a type of the event, e.g., a single touch, a multi-touch, a long touch, etc..

In operation 503, an input event is detected, and after the input event is detected, in operation 505, an attribute of the input event and a position where the input event has occurred may be determined. The attribute of the input event, such as a type of the input event, may be a kind of an input unit and/or input device, e.g., a touch screen, a keyboard, a mouse, etc., and/or may be a type of an input unit and/or input device such that if the input means is a touch screen, the input type may be a short touch, long touch, drag, tap, double touch, flick, drag and drop, swipe, multi-swipe, pinch, touch and hold, shake, rotate, etc.. The position where the input event has occurred may be information regarding at least an area on the display screen, e.g., pixel information, of the electronic device as described above, and/or information for selection of multiple applications displayed separately or with some parts of them overlapping on the display, e.g., a running area of a first application, and/or a running area of a second application.

In operation 507, applications to be focused and an event type may be determined, such that the event types to be delivered to an application to be focused and other applications may be determined by taking into account the attributes and positions of the input events. For example, if multiple touch events occur concurrently, the multiple touch events may be handled as multi touches for one application or may be handled as respective touches for multiple applications.

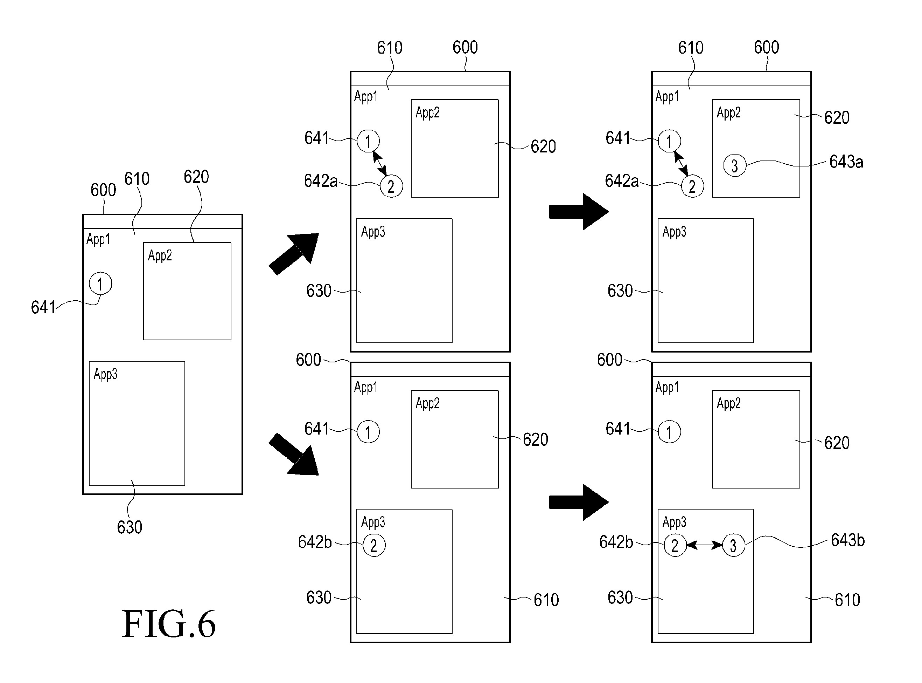

This will be discussed later in detail in connection with FIG. 6.

In operation 509, corresponding events may be delivered to the focused multiple applications, and the applications may handle the delivered events concurrently.

At least one of the operations shown in FIG. 5 may be omitted in some embodiments, or at least one additional operation may be added to the operations in some other embodiments. Operations of FIG. 5 may be processed in the displayed order, or the orderings may be changed.

In accordance with an embodiment of the present disclosure, a method for operating an electronic device may include displaying multiple applications, including at least a first application and a second application, on a screen of the electronic device, detecting a user input for the second application, generating a first virtual input for the first application based on the user input, generating a second virtual input different from the first virtual input based on additional information related to the user input, and performing a function corresponding to at least one of the first and second virtual inputs using the first application.

Generating a first virtual input for the first application may include setting up a new focus for the first application.

The second application may be an auxiliary input application.

The user input for the second application may be processed by converting the user input for the second application to be a user input for the first application, when a cursor displayed on the screen by execution of the auxiliary input application is placed in a screen area of the auxiliary input application.

The user input may include a touch input.

The first virtual input may include focusing and/or moving of a touch point, and the second virtual input may include a scroll event.

The additional information may include information regarding a second touch input that occurs during and/or after the first touch input.

The first application and the second application may be displayed such that at least parts of them may overlap each other on the screen.

If a user input occurs in the overlapping area of the first and second applications, then the user input may be handled as a user input for one of the first and second applications which is located on top of the another of the first and second applications.

FIG. 6 illustrates a concept of setting up multi-focusing for multiple windows, according to an embodiment of the present disclosure.

Referring to FIG. 6, multiple applications currently running may be displayed on the entirety of a screen 600 of an electronic device. For example, as shown in FIG. 6, a first application screen area 610, a second application screen area 620, and a third application screen area 630 may be displayed. As shown in FIG. 6, it may be seen that the second application screen area 620 and the third application screen area 630 overlap the first application screen area 610.

First, an occasion for upper branches shown in FIG. 6 will be described in various embodiments of the present disclosure. If a first touch event 641 occurs in the first application screen area 610, a focus is set up for the first application and the focused first application may handle the first touch event 641. After this, if a second touch event 642a occurs again in the focused first application screen area 610 before the first touch event 641 is completed, the electronic device may process the first and second touch events 641 and 642a as multi touches for the first application.

Next, if a third touch event 643a occurs in the second application screen area 620 before the first and second touch events 641 and 642a are completed, the electronic device may set up a new focus for the second application, i.e., respective focuses are set up for the first and second applications, and may enable the second application to handle the third touch event 643a concurrently in accordance with an embodiment of the present disclosure. Next, another occasion for lower branches shown in FIG. 6 will be described according to an embodiment of the present disclosure. If the first touch event 641 occurs in the first application screen area 610, a focus is set up for the first application and the focused first application may handle the first touch event 641. After this, if a second touch event 642b occurs in the third application screen area 630 before the first touch event 641 is completed, the electronic device may set up a new focus for the third application, i.e., respective focuses are set up for the first and third applications, and may enable the third application to handle the second touch event 642b concurrently in accordance with an embodiment of the present disclosure. Next, if a third touch event 643b occurs in the third application screen area 630 before the first and second touch events 641 and 642b are completed, the electronic device may process the second and third touch events 642b and 643b as multi touches for the third application without need to set up focus for the third application because the third application has already been focused.

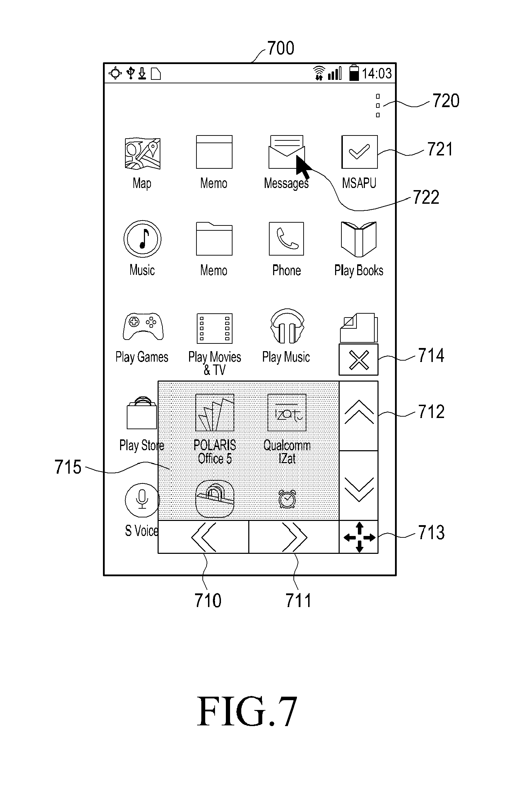

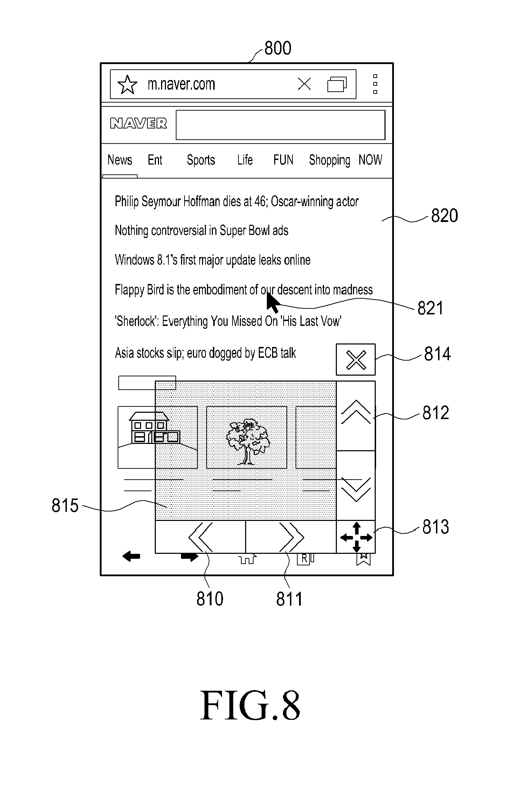

FIGS. 7 and 8 illustrate screens for operating background applications by using an auxiliary input application, according to an embodiment of the present disclosure.

Referring to FIG. 7, according to an embodiment of the present disclosure, if an input event occurs for an auxiliary input application, a control event corresponding to the input event may be handled concurrently by at least one other application.

According to an embodiment of the present disclosure, multiple applications currently running may be displayed on the entirety of a screen 700 of an electronic device. For example, as shown in FIG. 7, executable applications of the electronic device may be displayed as icons in a first application screen area 720 and an auxiliary input application for controlling the screen of the electronic device may be displayed in a second application screen area 710. The applications may be displayed such that at least parts of their screen areas overlap each other, as shown in FIG. 7. For example, the overlapping part of the first and second application screen areas 720 and 710 may be displayed translucently.

The auxiliary input application may be implemented in various forms. For example, as shown in FIG. 7, the auxiliary input application may include a left and right cursor movement button 711, an up and down cursor movement button 712, an auxiliary input movement button 713, an auxiliary input end button 714, an auxiliary input touch area 715, and the like.

With a cursor 722 placed on a particular application icon, e.g., a message box icon, in the first application screen area 720, if a user touches the auxiliary input touch area 715 of the auxiliary input application, a touch event occurs in response to the user touch and a control event corresponding to the touch event may be generated and delivered to the first application. Accordingly, a touch event may be generated at a point where the cursor 722 is placed in the first application. The message box icon is touched according to the touch event and a message box application may be executed.

Generation and handling of the event in the first application may be done in sync with occurrence of the event for the second application, due to multi focusing in accordance with embodiments of the present disclosure.

Referring to FIG. 8, according to an embodiment of the present disclosure, if an input event occurs in an auxiliary input application, a control event corresponding to the input event may be handled concurrently by at least one other application. Even when a long touch event occurs, it may control at least one other application due to multi focusing in accordance with embodiments of the present disclosure.

According to an embodiment of the present disclosure, a web page screen may be displayed in a first application screen area 820 of the entirety of a screen 800 of an electronic device. An auxiliary input application for controlling the screen 800 of the electronic device may be displayed as a second application screen area 810.

The applications may be displayed such that at least parts of their screen areas overlap each other, as shown in FIG. 8. For example, the overlapping part of the first and second application screen areas 820 and 810 may be displayed translucently.

The auxiliary input application may be implemented in various forms as described above. For example, as shown in FIG. 8, the auxiliary input application may include a left and right scroll button 811, an up and down scroll button 812, an auxiliary input movement button 813, an auxiliary input end button 814, an auxiliary input touch area 815, and the like.

With a cursor 821 placed on particular text in the first application screen area 820, if a user touches the auxiliary input touch area 815 of the auxiliary input application, a touch event occurs in response to the user touch and a control event corresponding to the touch event may be generated and delivered to the first application. Accordingly, a touch event may be generated at a point where the cursor 821 is placed in the first application. The touch event may lead to the corresponding text at a point where the cursor 821 is placed being touched and thus may lead to execution of a corresponding function in the first application.

Similar to what was discussed in connection with FIG. 7, generation and handling of an event in the first application may be done in sync with occurrence of an event for the second application, due to multi focusing in accordance with an embodiment of the present disclosure.

As shown in FIGS. 7 and 8, if the user touches the up and down scroll button 812 or the left and right scroll button 811 one time and releases such in the auxiliary input application, a scroll operation may be performed in another application, e.g., the first application, by forcing a touch event to occur in the first application with a predefined value determined by the auxiliary input application. According to an embodiment of the present disclosure, if the user touches and holds, and/or make a long touch on, a button for continuous operation, the auxiliary input application may detect the long touch event, and may keep generating and processing touch events for performing scroll operation in another application's screen area, e.g., the first application screen area, as long as the long touch event is detected.

Operations performed in the embodiments of FIGS. 7 and 8 may be as follows, for example, an electronic device may perform operations of displaying multiple applications including at least a first application, e.g., a browser, and a second application, e.g., a virtual auxiliary input application, on a screen of the electronic device, detecting a user input, e.g., a touch event, for the second application, generating a first virtual input for the first application based on the user input, e.g., focusing and/or movement of a point where the touch event has occurred, generating a second virtual input, e.g., a scroll, different from the first virtual input based on additional information related to the user input, e.g., a holding time of the touch event, a subsequent touch event after the touch event, e.g., double tap or multi drag, and performing a function corresponding to at least one of the first and second virtual inputs using the first application.

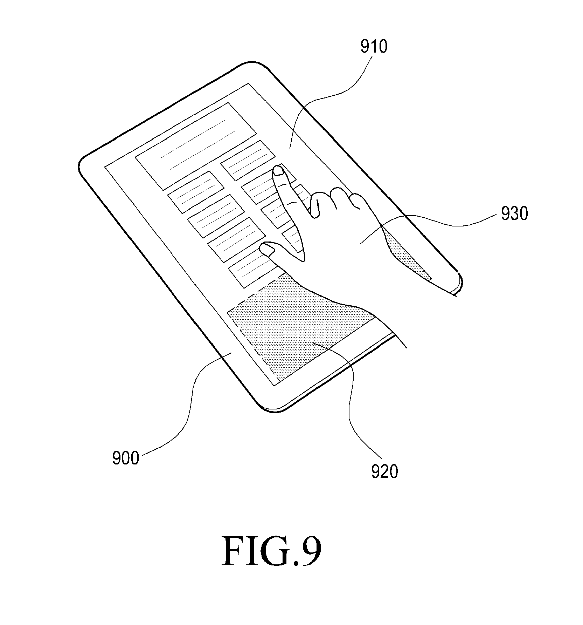

FIG. 9 illustrates an occasion where multiple applications are simultaneously controlled using multi-focusing, according to an embodiment of the present disclosure.

Referring to FIG. 9, multiple applications may be displayed on the entirety of a screen of an electronic device 900. For example, as shown in FIG. 9, a web page and/or a first application having various executable buttons may be displayed in a first application screen area 910 and a dummy application that does not handle any touch input may be displayed in a second application screen area 920. The applications may be displayed such that at least parts of their screen areas overlap each other, as shown in FIG. 9. The dummy application may ignore a touch event when the touch event occurs by a user in a display area of the dummy application.

For example, as shown in FIG. 9, by setting up at least some area of the electronic device 900 as the dummy area for ignoring touches made in the at least some area, convenience for making an input may increase when a user having a problem with his/her hands uses an electronic device with a large screen, e.g., a tablet device.

The second application screen area 920 is the dummy area ignoring any touch event that occurs therein. The user may adjust the size, shape, orientation, position, or the like of the dummy area. A touch event detected in the second application screen area 920 may not be delivered to the first application overlapped by and disposed below the second application screen area 920.

As such, according to an embodiment of the present disclosure, since multiple focuses may be set up for multiple applications, even if touch events are detected concurrently by the first application screen area 910 and the second application screen area 920, e.g., the dummy area, the touch event for the first application screen area 910 may be handled normally as the user intends. Accordingly, when the user touches the first application screen area 910 with his/her finger, even if a part of the user's hand 930 contacts the second application screen area 920, only the touch made in the first application screen area 910 may be recognized.

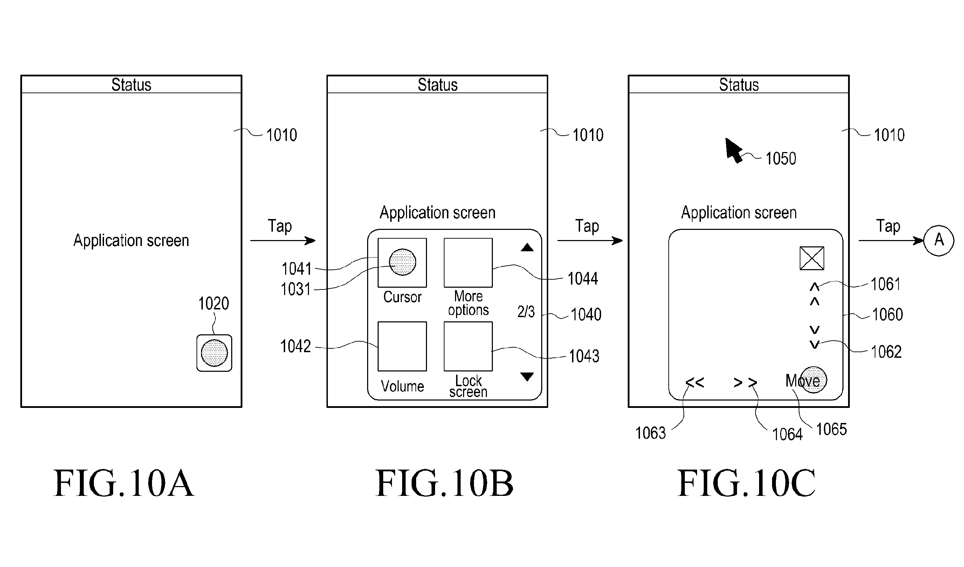

FIGS. 10A, 10B, and 10C illustrate execution of the auxiliary input application in an electronic device, according to an embodiment of the present disclosure.

Referring to FIG. 10A, a screen 1010 with one or more application icons included in a part of the display area of the electronic device may be displayed.

While the screen 1010 is displayed, a first part 1020 may be displayed in at least some area of the display.

If the user selects the first part 1020, a second part 1040, greater than the first part 1020, may be displayed in some area of the display, as shown in FIG. 10B. The second part 1040 may include items for selecting at least one of the functions of the electronic device. The items may be text, symbols and/or icons. The second part 1040 may include at least one of a first item 1041 for displaying and/or moving and/or controlling a cursor on the screen, a second item 1042 for volume adjustment and/or control, a third item 1043 for lock screen display and/or control, and/or a fourth item 1044 for displaying other items.

If the user selects item 1031 the first item 1041 with a tap gesture, a cursor 1050 and an auxiliary input application screen 1060 may be displayed in at least some area of the display, as shown in FIG. 10C. The auxiliary input application screen 1060 may include items for movement and/or control of the cursor 1050 and auxiliary input application screen 1060. For example, the auxiliary input application screen 1060 may include at least one of an up and down movement buttons 1061 and 1062, left and right movement buttons 1063 and 1064 for cursor movement or page scroll, and/or a window movement button 1065 for moving the auxiliary input application screen 1060.

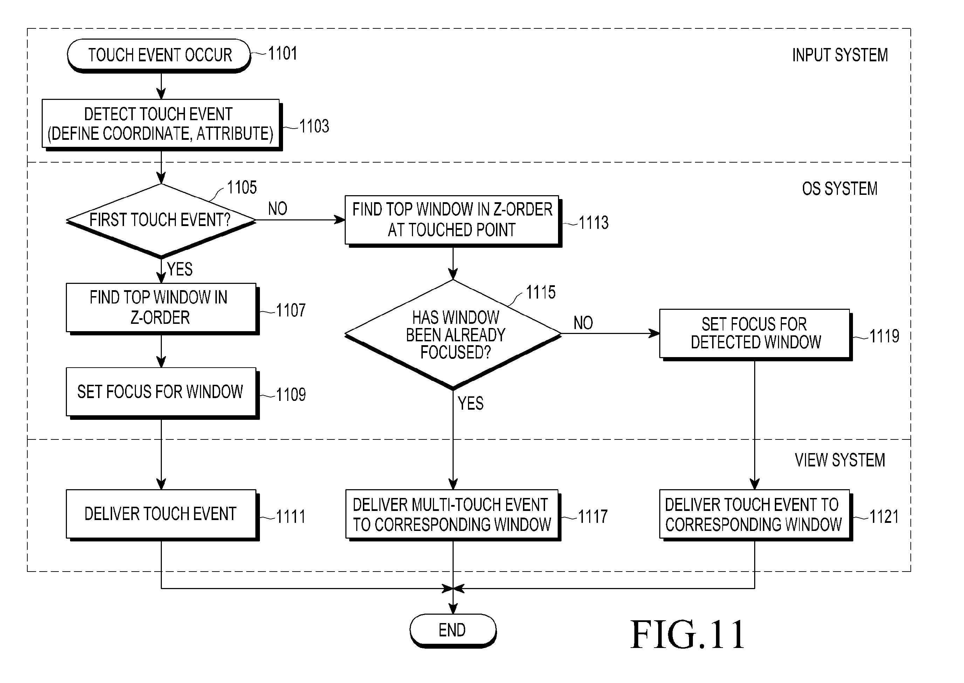

FIG. 11 is a flowchart illustrating a procedure of handling a touch event in an electronic device, according to an embodiment of the present disclosure.

Referring to FIG. 11, when a touch event occurs in operation 1101, the touch event may be detected in operation 1103. Upon detection of the touch event, information of coordinates of a point where the touch event has occurred on the screen, an attribute of the touch event, etc., may be determined.

In operation 1105, it is determined whether the detected touch event is a first touch event. The first touch event is a first touch event that occurs without an ongoing touch event. For example, if a new touch event occurs after previous touch events are all completed, the new touch event may be determined as the first touch event.

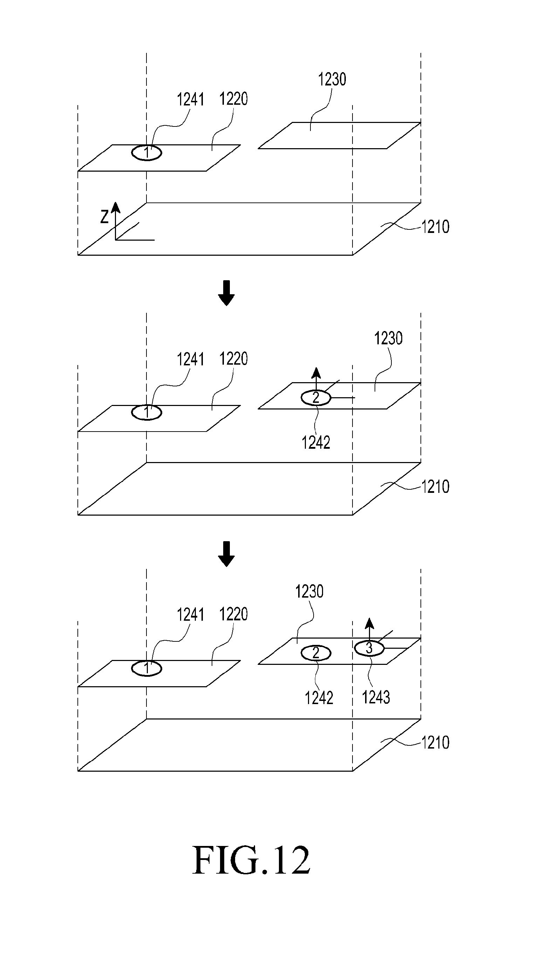

If it is determined that the detected touch event is the first touch event, then, in operation 1107, a top window in a Z-order may be determined or found at the point where the touch event has occurred. The top window in the Z-order may be an application screen lying and/or disposed on the top of overlapping multiple application screens as viewed from the user. This will be discussed in detail in connection with FIG. 12.

In operation 1109, a focus is set up for the top window in the Z-order. In operation 1111, the first touch event may be delivered to an application corresponding to the focused top window. Upon reception of the touch event, the application may perform a function corresponding to the touch event.

If it is determined, in operation 1105, that the touch event detected in operation 1103 is not the first touch event, then, in operation 1113, a top window in the Z-order may be determined at the point where the touch event has occurred. Then, in operation 1115, it may be determined whether a focus has already been set up for the top window, or in other words, it may be determined if the top window has been already focused in operation 1115. If it is determined that a focus has already been set up for the top window, then, in operation 1117, a multi-touch event may be delivered to an application corresponding to the top window.

Otherwise, if it is determined that a focus has not yet been set up for the top window in operation 1115, then, in operation 1119, a focus may be set up for the top window in the Z-order. In operation 1121, the detected touch event may be delivered to an application corresponding to the top window for which the focus is set up. Upon reception of the touch event, the application may perform a function corresponding to the touch event.

FIG. 12 illustrates a concept of setting up focuses for overlapping multiple applications, according to an embodiment of the present disclosure.

Referring to FIG. 12, multiple applications currently running may be displayed on the entirety of a screen of an electronic device. For example, as shown in FIG. 12, a first application screen area 1210, a second application screen area 1220, and a third application screen area 1230 may be displayed. As shown in FIG. 12, it may be seen that the second application screen area 1220 and the third application screen area 1230 overlap some parts of the first application screen area 1210.

One of the overlapping application screen areas, the one which is disposed on the top in a Z-axis, may be referred to as a top window in a Z-order. For example, in the embodiment of FIG. 12 where the second application screen area 1220 overlaps the first application screen area 1210, the second application screen area 1220 may be the top window in the Z-order. Likewise, in the embodiment of FIG. 12 where the third application screen area 1230 overlaps the first application screen area 1210, the third application screen area 1230 may be the top window in the Z-order.

In the embodiment of FIG. 12, a point where a first touch event 1241 has occurred may be an overlapping area of the first and second application screen areas 1210 and 1220. As described in connection with FIG. 11, a top window in the Z-order, at the point where the first touch event 1241 has occurred, may be the second application screen area 1220. In accordance with an embodiment of the present disclosure, with the first touch event 1241, a new focus may be set up for the second application screen area 1220 and the first touch event 1241 may be delivered to the second application and handled in the second application.

In the embodiment of FIG. 12, a point where a second touch event 1242 has occurred may be an overlapping area of the first and third application screen areas 1210 and 1230. As described in connection with FIG. 11, a top window in the Z-order at the point where the second touch event 1242 has occurred may be the third application screen area 1230. In accordance with an embodiment of the present disclosure, since a focus has not yet been set up for the third application screen area 1230, a new focus may be set up. Now that the new focus is set up for the third application screen area 1230, the second touch event 1242 may be delivered to the third application and handled therein. Since focuses are set up for both the second and third application screen areas 1220 and 1230, i.e. multi-focusing is set up, even if the first and second touch events 1241 and 1242 occur concurrently, they may not be handled as a multi-touch event for a single application but be handled by respective applications.

In the embodiment of FIG. 12, a point where the third touch event 1243 has occurred may be the same overlapping area of the first and third application screen areas 1210 and 1230 as for the second touch event 1242. As described in connection with FIG. 11, a top window in the Z-order at the point where the third touch event 1243 has occurred may be the third application screen area 1230. In accordance with the embodiment of the present disclosure, since the third application screen area 1230 has already been focused by the second touch event 1242, the third touch event 1243 may be handled with the second touch event 1242 as a multi-touch event for the third application.

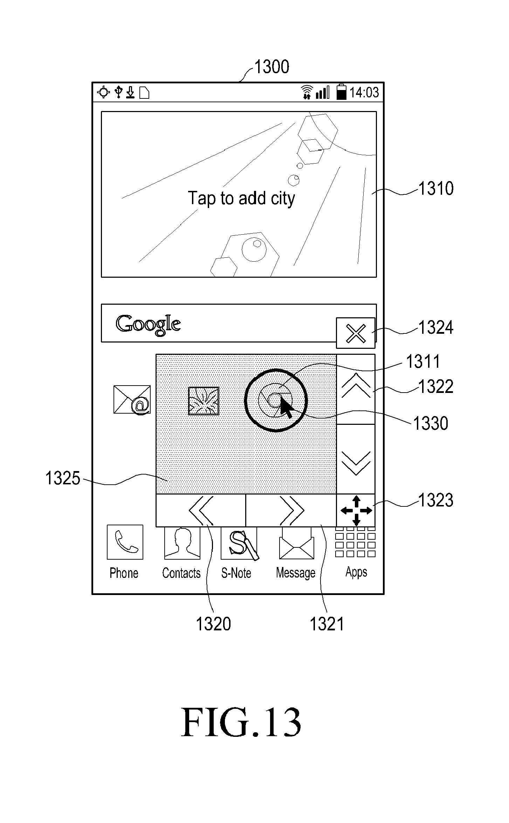

FIG. 13 illustrates a screen in which a cursor is positioned in an area of an auxiliary input application, according to an embodiment of the present disclosure.

Referring to FIG. 13, according to an embodiment of the present disclosure, if an input event occurs in an auxiliary input application, a control event corresponding to the input event may be handled by at least one other application concurrently. In connection with FIG. 13, a method for handling a touch event is represented in case where an auxiliary input application and a target application are displayed such that parts of their screen areas overlap each other.

According to an embodiment of the present disclosure, a web page screen may be displayed in a first application screen area 1310 of the entirety of a screen 1300 of an electronic device. An auxiliary input application for controlling the screen of the electronic device may be displayed in a second application screen area 1320. The applications may be displayed such that at least parts of their screen areas overlap each other, as shown in FIG. 13. For example, the overlapping part of the first and second application screen areas 1310 and 1320 may be displayed translucently.

The auxiliary input application may be implemented in various forms as described above. For example, as shown in FIG. 13, the auxiliary input application may include a left and right scroll button 1321, an up and down scroll button 1322, an auxiliary input movement button 1323, an auxiliary input end button 1324, an auxiliary input touch area 1325, and the like.

In accordance with an embodiment of the present disclosure, with a cursor 1330 placed in an overlapping area of the first and second application screen areas 1310 and 1320, a method for handling an occasion when a user intends to select and execute an executable icon 1311 for a particular application in the first application screen area 1310 that lies below the second application screen area 1320 in the Z-order is disclosed.

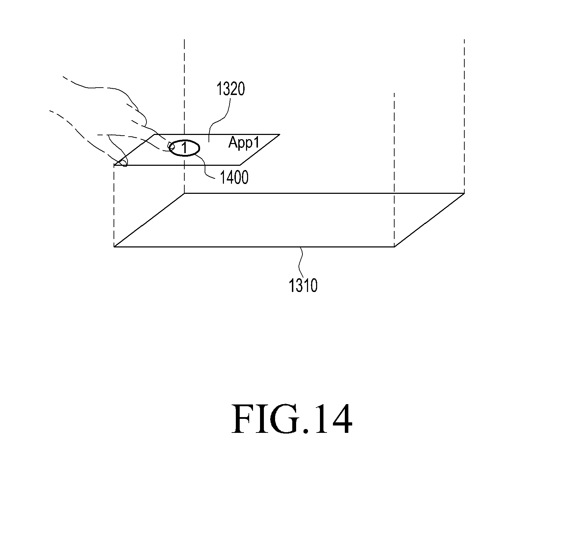

FIG. 14 illustrates a concept of handling a touch event, according to an embodiment of the present disclosure.

Referring to FIG. 14, as shown in FIG. 13, if a first touch event 1400 occurs in an overlapping area of the first and second application screen areas 1310 and 1320, the user may intend to handle the first touch event 1400 in the first application screen area 1310 rather than in the second application screen area 1320. For example, as shown in FIG. 13, with an intention to execute the executable icon 1311 in the first application, the user may touch the cursor 1330 placed in the overlapping area.

If the second application overlapping the first application is a predetermined particular application, e.g., the auxiliary input application, a touch event 1400 in the overlapping area may be handled not as a touch event for the top application screen area in the Z-order, e.g., the second application screen area 1320, but as a touch event for the second top application screen area, e.g., the first application screen area 1310.

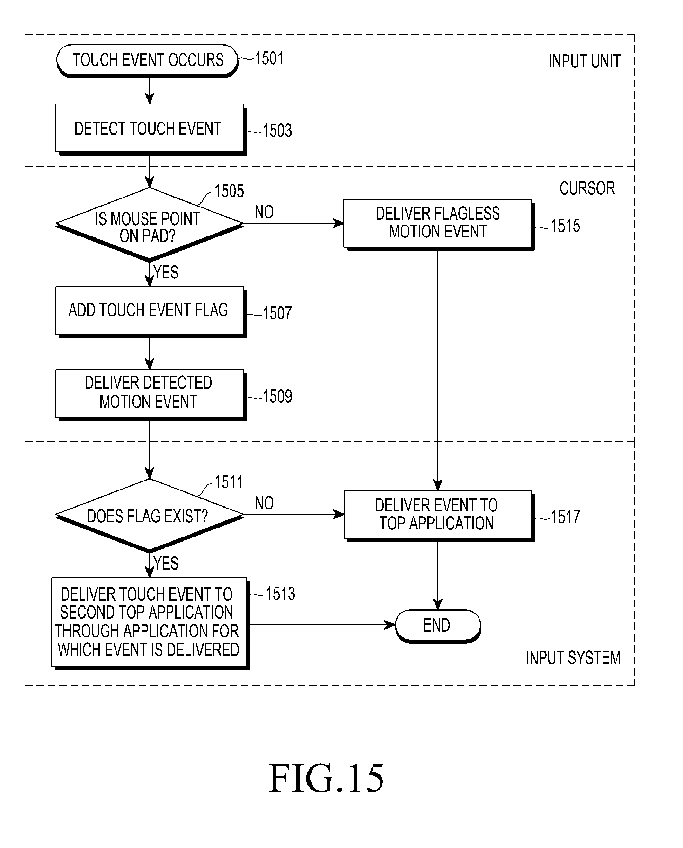

FIG. 15 is a flowchart illustrating a procedure of handling a touch event in an overlapping application, according to an embodiment of the present disclosure.

Referring to FIG. 15, when a touch event occurs in operation 1501, the touch event may be detected in operation 1503. Upon detection of the touch event, information of coordinates of a point where the touch event has occurred on the screen, an attribute of the touch event, etc., may be determined.

In operation 1505, it is determined whether a mouse point, e.g., a point at which a cursor is placed, is on a pad, or in other words, is in an overlapping screen area of the auxiliary input application and other applications.

If it is determined that the mouse point is in a screen area of the auxiliary input application, as shown in FIG. 13, then, in operation 1507, a touch event flag, e.g., 'AMOTION_EVENT_FLAG_WINDOWS_IS_ACCESSIBILITY', is added. The touch event flag may be added to the kernel 131 of an input system.

In operation 1509, a detected motion event, e.g., a touch event, may be delivered to the auxiliary input application, which is the top application in the Z-order.

In operation 1511, the auxiliary input application may determine whether a flag exists, or in other words, determine whether there is a flag for the touch event, and if it is determined that the flag exists, as added in operation 1507, then, in operation 1513, the touch event may be delivered to a second top application passing through the application, e.g., the auxiliary input application, to which the touch event has been delivered. For example, if a touch event occurs on a cursor which is placed in the auxiliary input application, the touch event may not be handled as a touch event for the second top application passing through the auxiliary input application rather than as a touch event for the auxiliary input application, which is the top application in the Z-order. For example, as shown in FIG. 13, an executable icon for the particular application below the auxiliary input application may be selected.

If it is determined, in operation 1505, that the mouse point is not in the screen area of the auxiliary input application, then, in operation 1515, a flagless motion event, e.g., a touch event without a flag, may be delivered to a corresponding application. In operation 1517, the flagless motion event may be delivered to the top application, e.g., the auxiliary input application, in the Z-order.

If it is determined in operation 1511 that the motion event is flagless, then, in operation 1517, the flagless motion event may be delivered to a top application in the Z-order.

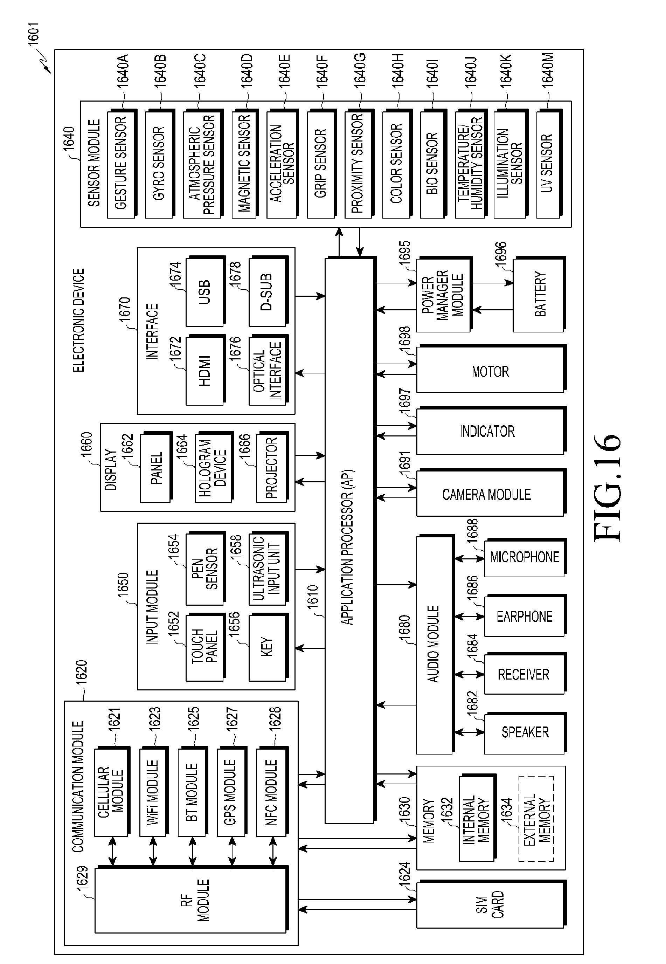

FIG. 16 is a block diagram of an electronic device, according to an embodiment of the present disclosure.

Referring to FIG. 16, an electronic device 1601 may constitute the entirety or some of the electronic device 101 shown in FIG. 1. The electronic device 1601 may include at least one Application Processor (AP) 1610, a communication module 1620, a Subscriber Identification Module (SIM) card 1624, a memory 1630, a sensor module 1640, an input unit 1650, a display 1660, an interface 1670, an audio module 1680, a camera module 1691, a power manager module 1695, a battery 1696, an indicator 1697, and a motor 1698.

The AP 1610 may control hardware and software components connected to the AP 1610 by running an operating system and/or application programs, and may perform data processing and operations. The AP 1610 may be implemented in any suitable form of hardware, e.g., a System on Chip (SoC). In accordance with an embodiment, the AP 1610 may further include a Graphic Processing Unit (GPU) (not shown).

The communication module 1620, which may be similar to the communication interface 160 as shown in FIG. 1, may communicate data with other electronic devices, such as the external electronic device 104 and the server 106 connected via the network 162. In accordance with an embodiment, the communication module 1620 may include a cellular module 1621, a Wi-Fi module 1623, a BT module 1625, a GPS module 1627, an NFC module 1628, and a Radio Frequency (RF) module 1629.

The cellular module 1621 may provide voice calls, video calls, SMS and/or Internet services over a communication network, such as LTE, LTE-A, CDMA, WCDMA, UMTS, WiBro, GSM, etc. The cellular module 1621 may also identify and authenticate an electronic device in the communication network in cooperation with the SIM card 1624. In accordance with an embodiment, the cellular module 1621 may perform at least a part of functions that the AP 1610 may provide. For example, the cellular module 1621 may perform at least a part of multimedia control function.

In an embodiment, the cellular module 1621 may include a Communication Processor (CP) (not shown). The cellular module 1621 may also be implemented in an SoC. While the components of FIG. 16, such as the cellular module 1621, which may include the CP, the memory 1630 and the power manager module 1695 are illustrated as being separate from the AP 1610, the AP 1610 may incorporate some and/or all of the aforementioned components, e.g., the cellular module 1621, in other embodiments.

In accordance with an embodiment, the AP 1610 and/or the cellular module 1621 may load a command and/or data received from at least one of a non-volatile memory and other components connected to the AP 1610 and/or the cellular module 1621, and then process the command and/or the data. In addition, the AP 1610 and/or the cellular module 1621 may store data received from at least one of the other components and/or generated by at least one of the other components in a non-volatile memory.

The Wi-Fi module 1623, the BT module 1625, the GPS module 1627, and the NFC module 1628 may each include a processor (not shown) for processing data sent and/or received through the corresponding module. While FIG. 16 illustrates each of the cellular module 1621, the Wi-Fi module 1623, the BT module 1625, the GPS module 1627, and the NFC module 1628 as a separate block, some and/or all of them may be incorporated in a single Integrated Circuit (IC) and/or an IC package in other embodiments. For example, at least some of processors corresponding to the cellular module 1621, the Wi-Fi module 1623, the BT module 1625, the GPS module 1627, and the NFC module 1628, e.g., a CP of the cellular module 1621 and a Wi-Fi processor of the Wi-Fi module 1623, may be implemented in a single SoC.

The RF module 1629 may perform data communication, more specifically, RF signal communication. The RF module 1629 may include a transceiver, a Power Amp Module (PAM), a frequency filter, and/or a Low Noise Amplifier (LAN) (not shown). The RF module 1629 may further include some parts for wireless communication, i.e., for transmitting and/or receiving RF signals over the air, such as conductors, wires, etc. While FIG. 16 illustrates that the cellular module 1621, the Wi-Fi module 1623, the BT module 1625, the GPS module 1627, and the NFC module 1628 share the single RF module 1629, at least one of them may perform RF signal communication through a separate RF module.

The SIM card 1624 may include a subscriber identification module, and may be inserted into a slot formed in a particular position in the electronic device 1601.

The SIM card 1624 may include a unique identification information, such as an Integrated Circuit Card Identifier (ICCID), and/or subscriber information, such as an International Mobile Subscriber Identity (IMSI).

The memory 1630, which may be similar to the memory 130 of FIG. 1, may include an internal memory 1632 and/or an external memory 1634. The internal memory 1632 may include at least one of a volatile memory, such as a Random Access Memory (RAM), a Dynamic RAM (DRAM), a Static RAM (SRAM), Synchronous DRAM (SDRAM), and/or the like, and/or a non-volatile memory, such as a Read Only Memory (ROM), a One Time Programmable ROM (OTPROM), a Programmable ROM (PROM), an Erasable and Programmable ROM (EPROM), an Electrically Erasable and Programmable ROM (EEPROM), a mask ROM, a flash ROM, a NAND flash memory, a Nor flash memory, and/or the like.

In an embodiment, the internal memory 1632 may be a Solid State Drive (SSD). The external memory 1634 may include a flash drive, such as a Compact Flash (CF), a Secure Digital (SD), a Micro Secure Digital (Micro-SD), a Mini Secure Digital (Mini-SD), an Extreme Digital (xD), a memory stick, and/or the like. The external memory 1634 may be operationally connected to the electronic device 1601 through various interfaces. In an embodiment, the electronic device 1601 may further include a storage device and/or a storage medium, such as a hard drive.

The sensor module 1640 may measure a physical quantity and/or convert information measured and/or detected by monitoring the electronic device 1601 to an electric signal. The sensor module 1640 may include at least one of a gesture sensor 1640A, a gyro sensor 1640B, an atmospheric pressure sensor 1640C, a magnetic sensor 1640D, an acceleration sensor 1640E, a grip sensor 1640F, a proximity sensor 1640G, a color sensor 1640H, such as a Red, Green, Blue (RGB) sensor, a bio sensor 1640I, a temperature/humidity sensor 1640J, an illumination sensor 1640K, and an Ultra Violet (UV) sensor 1640M. Additionally, the sensor module 1640 may include, although not shown, an E-nose sensor, an Electromyography (EMG) sensor, an Electroencephalogram (EEG) sensor, an Electrocardiogram (ECG) sensor, an Infrared (IR) sensor, an iris sensor, a finger print sensor, or the like. The sensor module 1640 may further include a control circuit for controlling at least one of the sensors included in the sensor module 540.

The input unit 1650 may include a touch panel 1652, a pen sensor 1654, which may be a digital pen sensor, a key 1656, and an ultrasonic input device 1658. The touch panel 1652 may recognize and/or determine touch inputs in at least one of a capacitive, a resistive, an infrared, and/or an ultrasonic method. The touch panel 1652 may further include a control circuit. With the capacitive method, physical contact and/or proximity detection may be possible. The touch panel 1652 may further include a tactile layer (not shown). In this regard, the touch panel 1652 may provide the user with a tactile response.

The pen sensor 1654 may be implemented in a way identical or similar to detecting how a touch input of a user is received, and/or by using a separate sheet for recognition. The key 1656 may include, though not shown, a physical button, an optical key and/or a key pad. The ultrasonic input device 1658 may use an input tool (not shown) that generates an ultrasonic signal and may enable the electronic device 1601 to determine data by sensing the ultrasonic signal to the microphone 1688, thereby enabling wireless recognition. In an embodiment, the electronic device 1601 may receive a user input from an external device, such as a computer and/or a server, through the communication module 1620.

The display 1660, which may be similar to the display 150 of FIG. 1, may include a panel 1662, a hologram device 1664, and a projector 1666. The panel 1662 may be any one of a Liquid Crystal Display (LCD), an Active Matrix Organic Light Emitting Diode (AMOLED) display, and/or any other similar and/or suitable display device and/or display unit. The panel 1662 may be implemented to be flexible, transparent, and/or wearable. The panel 1662 may also be incorporated with the touch panel 1652 in a unit. The hologram device 1664 may make three dimensional (3D) images, such as holograms, in the air by using light interference. The projector 1666 may display an image by projecting light onto a screen (not shown). The screen may be, for example, located inside or outside of the electronic device 1601. In accordance with an embodiment, the display 1660 may further include a control circuit (not shown) to control the panel 1662, the hologram device 1664, or the projector 1666.

The interface 1670 may include a HDMI 1672, a USB 1674, an optical interface 1676, or a D-subminiature (D-sub) 1678. The interface 1670 may be included in the communication interface 160 shown in FIG. 1. Additionally, the interface 1670 may include a Mobile High-definition Link (MHL) interface (not shown), a SD card/multimedia card (MMC) interface (not shown), or an Infrared Data Association (IrDA) standard interface (not shown).

The audio module 1680 may convert a sound to an electric signal and/or vice versa. At least a part of the audio module 1680 may be included in the I/O interface 140 as shown in FIG. 1. The audio module 1680 may process sound information input and/or output through a speaker 1682, a receiver 1684, an earphone 1686, and/or a microphone 1688.

The camera module 1691 may be a device for capturing still images and videos, and may include, although not shown in FIG. 1, one or more image sensors, e.g., front and back sensors, a lens, an Image Signal Processor (ISP), and/or a flash such, as an LED or a xenon lamp.

The power manager module 1695 may manage power of the electronic device 1601. Although not shown, a Power management Integrated Circuit (PMIC), a charger IC, and/or a battery and/or fuel gauge is included in the power manager module 1695.

The PMIC may be mounted on an IC or an SOC. A charging method may be divided into wired and wireless charging methods. The charger IC may charge a battery and prevent overvoltage and/or overcurrent from being induced from a charger. In an embodiment, the charger IC may be used in at least one of a cable charging scheme and a wireless charging scheme. The wireless charging scheme may include a magnetic resonance scheme, a magnetic induction scheme, and/or an electromagnetic wave based scheme, and an additional circuit, such as a coil loop, a resonance circuit, a rectifier, or the like may be added for wireless charging.

The battery gauge may measure an amount of remaining power of the battery 696, a voltage, a current, and/or a temperature while the battery 1696 is being charged. The battery 1696 may save and/or generate electricity, and may supply power to the electronic device 1601 with the saved and/or generated electricity. The battery 1696 may include a rechargeable battery (not shown) and/or a solar battery (not shown).

The indicator 1697 may indicate a particular state of the electronic device 1601 and/or a part of the electronic device, e.g., the AP 1610, the particular state including a booting state, a message state, a charging state, a sleep state, or any other similar state. The motor 1698 may convert electric signals to mechanical vibration. Although not shown, a processing unit for supporting mobile TV, such as a GPU, may be included in the electronic device 1601. The processing unit for supporting mobile TV may process media data conforming to a standard for Digital Multimedia Broadcasting (DMB), Digital Video Broadcasting (DVB), or media flow.

Each of the aforementioned components of the electronic device may include one or more parts, and a name of the part may vary with a type of the electronic device. The electronic device, in accordance with an embodiment of the present disclosure, may include at least one of the aforementioned components, omit some of them, and/or include other additional components. Some of the components may be combined into an entity that may perform the same functions as the components may do.

The term 'module' may refer to a unit including one of hardware, software, and firmware, or a combination thereof. The term 'module' may be interchangeably used with a unit, logic, logical block, component, or circuit. The module may be a minimum unit or part of an integrated component. The module may be a minimum unit or part of performing one or more functions. The module may be implemented mechanically and/or electronically. For example, the module may include at least one of Application Specific Integrated Circuit (ASIC) chips, Field Programmable Gate Arrays (FPGAs), or Programmable Logic Arrays (PLAs) that perform some operations, which have already been known or will be developed in the future.

At least a part of the device, e.g., modules or their functions, and/or the method, e.g., operations, may be implemented as instructions stored in a computer-readable storage medium which may be non-volatile and/or non-transitory, e.g., in the form of a programming module. The instructions, when executed by one or more processor, e.g., the processor 210, may cause the processor to carry out a corresponding function. The computer-readable storage medium may be the memory 220. At least a part of the programming module may be implemented by the processor 210. At least a part of the programming module may include a module, a program, a routine, a set of instructions, a process, or the like for performing one or more functions.

The computer-readable storage medium may include a hardware device configured to store and perform program instructions, e.g., a programming module, such as magnetic media, such as hard discs, floppy discs, and magnetic tapes, optical media, such as Compact Disc ROMs (CD-ROMs) and Digital Versatile Discs (DVDs), magneto-optical media, such as floptical disks, ROMs, RAMs, Flash Memories, and/or the like. Examples of the program instructions may include not only machine language codes but also high-level language codes which are executable by various computing devices using an interpreter. The aforementioned hardware devices may be configured to operate as one or more software modules to carry out an embodiment of the present disclosure, and vice versa.

Modules and/or programming modules in accordance with various embodiments of the present disclosure may include at least one or more of the aforementioned components, omit some of them, or further include other additional components. Operations performed by modules, programming modules or other components in accordance with various embodiments of the present disclosure may be carried out sequentially, non-sequentially, simultaneously, repeatedly, or heuristically. Furthermore, some of the operations may be performed in a different order, or omitted, or include other additional operations.

In accordance with an embodiment, a storage medium having instructions stored thereon is provided. The instructions, when executed by at least one processor, may cause the at least one processor to perform at least one operation including displaying multiple applications including at least a first application and a second application on a screen of an electronic device, detecting a user input for the second application, generating a first virtual input for the first application based on the user input, generating a second virtual input different from the first virtual input based on additional information related to the user input, and performing a function corresponding to at least one of the first and second virtual inputs by means of the first application.

In accordance with the embodiments of the present disclosure, multiple applications may be used by multiple users in a single electronic device by enabling events for multiple applications to be detected in a software platform and controlling the multiple applications simultaneously. Also, in accordance with the embodiments of the present disclosure, an auxiliary input application in a form of a Graphic User Interface (GUI), e.g., an application in a form of a mouse pad, may be provided on the screen of an electronic device and other applications may be simultaneously controlled according to an input event for the auxiliary input application. Controlling the multiple applications simultaneously may enable multiple functions to be performed simultaneously.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for operating an electronic device, the method comprising:
displaying at least a first application and a second application on a screen of the electronic device;
detecting a user input for the second application;
generating a first virtual input for the first application based on the user input for the second application;
generating a second virtual input, which is different from the first virtual input, based on additional information related to the user input for the second application; and
performing a function corresponding to at least one of the first virtual input and the second virtual input using the first application.

2. The method of claim 1, wherein the generating of the first virtual input for the first application comprises setting up a new focus for the first application.

3. The method of claim 1, wherein the second application comprises an auxiliary input application.

4. The method of claim 3, wherein the user input for the second application is processed by converting the user input for the second application into a user input for the first application, when a cursor displayed on the screen by execution of the auxiliary input application is placed in a screen area of the auxiliary input application.

5. The method of claim 3, wherein the user input for the second application comprises a touch input.

6. The method of claim 5, wherein the first virtual input comprises at least one of focusing of a touch point and moving of a touch point, and
wherein the second virtual input comprises a scroll event.

7. The method of claim 5, wherein the additional information includes information regarding a second touch input that occurs at least one of during and after a first touch input.

8. The method of claim 1, wherein the first application and the second application are displayed on the screen such that at least a part of the first application and a part of the second application overlap each other in an overlapping area of the first and second applications.

9. The method of claim 8, wherein if a user input occurs in the overlapping area of the first and second applications, the user input may be handled as a user input for one of the first application and the second application which is located on the top of the Z-order.

10. An electronic device that runs multiple applications, the electronic device comprising:
a display configured to display at least a first application and a second application on a screen of the electronic device; and
a processor configured to detect a user input for the first application, to generate a first virtual input for the first application based on the user input for the second application, to generate a second virtual input, which is different from the first virtual input, based on additional information related to the user input for the second application, and to perform a function corresponding to at least one of the first virtual input and the second virtual inputs using the first application.

11. The electronic device of claim 10, wherein the processor is configured to set up a new focus for the first application during the generating of the first virtual input for the first application.

12. The electronic device of claim 10, wherein the second application comprises an auxiliary input application.

13. The electronic device of claim 12, wherein the processor is configured to process the user input for the second application by converting the user input for the second application into a user input for the first application, when a cursor displayed on the screen by execution of the auxiliary input application is placed in a screen area of the auxiliary input application.

14. The electronic device of claim 12, wherein the user input for the second application comprises a touch input.

15. The electronic device of claim 10, wherein the first application and the second application are displayed on the screen such that at least a part of the first application and a part of the second application overlap each other in an overlapping area of the first and second applications.
